# DEMANDE DE BREVET EUROPEEN

(11) **EP 0 898 353 A1**
(43) Date de publication de la demande: **24.02.1999**
(21) Numéro de dépôt: 98420120.2
(22) Date de dépôt: 15.07.1998
(51) Int. Cl.: H02K 7/18, F02B 63/04, H02K 1/27, H02K 21/24

(54) **Groupe électrogène perfectionné**

(30) Priorité: 22.08.1997 EP 97420148
(71) Demandeur: Ecomag S.A., 74100 Ville-la-Grand (FR)
(72) Inventeur: Gambette, Daniel, 74370 Naves/Parmelan (FR)
(74) Mandataire: Moinas, Michel

(57) **Abrégé**

Le groupe électrogène comprend un moteur thermique (10) accouplé à un générateur électrique, le générateur étant du type synchrone avec un rotor (30) sous forme de disque rotatif portant en sa face frontale des amants permanents (32) en vis-à-vis de bobinages induits (30) portés en la face d'un disque fixe formant le stator (40). Le rotor est directement associé au volant (20) du moteur thermique et il est constitué d'un disque pourvu d'une cavité circulaire (38) dans laquelle sont encastrés les amants permanents (30). Les aimants permanents sont au ras de la face du rotor (30) tournée vers le stator (40) et ils sont enfermés dans la cavité circulaire (38) du rotor (30) par une tôle de maintien et de protection (54) fixée à celui-ci. Cette tôle est en un acier inoxydable amagnétique.

## Description

La présente invention est relative à un groupe électrogène qui comprend un moteur thermique entraînant un générateur convertissant l'énergie mécanique de rotation en une énergie électrique de tension alternative, le cas échéant, redressée en tension continue. Cette invention concerne plus particulièrement des groupes électrogènes de moyenne puissance, c'est-à-dire délivrant une puissance électrique comprise entre 1 kVA à 20 kVA. De tels groupes électrogènes permettent de fournir de manière autonome de l'énergie électrique en des lieux non alimentés par le réseau électrique national.

Les groupes électrogènes de ce type de puissance comprennent usuellement un moteur diesel ou à essence comportant entre un à quatre cylindres. L'arbre de sortie du moteur est accouplé plus ou moins directement au rotor d'un générateur, ce rotor se présentant généralement sous une forme cylindrique horizontale avec des bobinages ou des aimants d'induction et tournant au centre d'un stator cylindrique fixe horizontal coaxial comportant des bobinages induits. Fréquemment, le moteur comprend un volant d'inertie pour lisser la courbe de sortie de puissance mécanique rotative, ce volant étant contenu dans un carter ou flasque de protection et de sécurité en regard des usagers. La longueur du groupe est alors la somme des longueurs du moteur et du générateur, et peut varier entre 1 m à 2 m. De tels groupes sont donc encombrants. De plus, ce type de groupes électrogènes est usuellement lourd, non étanche à l'humidité et à la poussière, et comprend des pièces d'usure telles que des roulements ou balais.

On connaît du AT 390 127 un autre type de groupe électrogène qui combine un moteur diesel, un générateur à amants permanents et une unité de pompage. Le générateur comprend un rotor sous forme de deux disques rotatifs associés au volant du moteur et portant chacun sur une de ses faces des aimants permanents en vis-à-vis de bobinages induits portés par un disque stator fixe inséré entre les deux disques du rotor. Dans cette réalisation, le deuxième disque rotatif porteur d'amants est indispensable pour neutraliser l'effet de traction axiale provoqué par le flux magnétique. La présence du deuxième disque et le fait que le disque stator est disposé au centre du générateur rendent l'ensemble relativement encombrant et sa fabrication est compliquée et onéreuse.

Les générateurs de ce genre sont en général limités à une vitesse de 3600 tours/minute puisqu'à des vitesses supérieures, il y a un risque d'endommager les amants permanents, en particulier lorsque ceux-ci sont réalisés à base de samarium de cobalt qui est sous forme d'une poudre comprimée qui s'effrite facilement. En outre, les aimants ne sont pas protégés contre le milieu agressif tel que le milieu salin qui règne à bord des navires de mer.

Le but de la présente invention est de proposer un groupe électrogène dans la gamme de puissances comprises entre 1 kVA à 20 kVA qui évite les inconvénients précités, notamment qui soit particulièrement compact, relativement léger, et qui ne possède pratiquement aucune pièce d'usure.

Le groupe électrogène suivant l'invention permet en outre des vitesses de rotation très élevées dépassant largement la vitesse normale et traditionnelle de ce genre de groupe électrogène qui est de 3 600 tours/minute.

Ces buts sont atteints par un groupe électrogène comprenant un moteur thermique accouplé à un générateur électrique, le générateur étant du type synchrone avec un rotor sous forme de disque rotatif portant en sa face frontale des aimants permanents en vis-à-vis de bobinages induits portés en la face d'un disque fixe formant le stator, le rotor étant directement associé au volant du moteur thermique. Ce groupe électrogène est caractérisé en ce que le rotor est constitué d'un disque unique pourvu d'une cavité circulaire dans laquelle sont encastrés les aimants permanents.

Ce groupe s'avère alors particulièrement compact, c'est-à-dire que l'encombrement a pu être réduit pratiquement de moitié par rapport aux dimensions des groupes électrogènes classiques et le groupe selon l'invention permet des vitesses de rotation pouvant atteindre 6 000 tours/minute.

Selon d'autres caractéristiques de l'invention :
- les amants permanents sont au ras de la face du rotor tournée vers le stator;
- les amants permanents sont enfermés dans la cavité circulaire du rotor par une tôle de maintien et de protection fixée à celui-ci;
- la tôle de maintien et de protection est en un acier inoxydable amagnétique;
- le disque rotor est intégré dans le volant du moteur thermique;
- le disque stator est intégré dans un couvercle en vis-à-vis d'un carter de protection du volant;
- les forces axiales engendrées par les aimants sont reprises par une butée axiale sous forme d'un roulement externe au moteur thermique;
- la butée axiale est disposée entre le rotor et le stator;
- la face du stator en regard du rotor est protégée par un vernis ou un enrobage de protection et moulée dans une résine comportant des liants absorbant les chocs thermiques.

Utilement, l'évidement central du couvercle présente un logement pour un circuit de régulation, un circuit de conversion, voire un circuit de redressement de puissance, par éléments semi-conducteurs, et, le cas échéant, une carte électronique de commande des éléments semi-conducteurs. Grâce à cet agencement de proximité du groupe redresseur, on limite les pertes électriques et on maintient l'aspect compact du groupe électrogène apte à délivrer, selon le besoin, une tension alternative ou continue. En outre, l'évidement central peut servir pour le passage d'un prolongement du vilebrequin du moteur thermique pour l'accouplement, par un arbre de transmission, de toute autre machine ou d'un entraînement mécanique quelconque.

De préférence, les aimants permanents sont réalisés à base de samarium de cobalt, ce matériau présentant une grande longévité d'aimantation utile pour des utilisations à long terme de puissance moyenne. Le volant-rotor est plutôt réalisé en fonte pour des considérations de poids et de solidité alors que le couvercle est plutôt réalisé en aluminium permettant de bien évacuer la chaleur.

Le circuit magnétique du stator se présente sous la forme d'une couronne circulaire portant une série de pôles radiaux côte-à-côte et orientés axialement vers le rotor, un bobinage étant enroulé autour de chaque pôle, leur nombre, leur branchement et leur nombre de spires dépendant de la puissance et de la fréquence de la tension alternative désirée.

Utilement, le couvercle présente une nervure cylindrique entourant le stator et pénétrant avec un faible jeu dans une rainure circulaire ménagée en correspondance dans le disque-rotor. On peut mettre ainsi à profit la stabilité inhérente du volant d'inertie pour aménager une chicane par tenon/rainure faisant office de joint d'étanchéité en regard de la poussière et de l'humidité pour protéger ce générateur appelé à travailler dans des environnements difficiles.

Selon un mode de réalisation, le disque-rotor est rapporté contre la face externe du volant d'inerte ou en l'extrémité de l'arbre de sortie du moteur portant le volant d'inertie, par exemple, au moyen de boulons, si désiré par l'intermédiaire d'une bague d'écartement. De manière similaire, le disque-stator ou le circuit magnétique du stator portant les enroulements induits est rapporté contre la face interne du couvercle de carter de protection, par exemple, au moyen de boulons.

Ce mode de réalisation simple et peu onéreux permet de transformer et de réhabiliter des moteurs existants. Le montage en est particulièrement facile.

Pour les puissances moyennes de 1 à 20 kVA envisagées, l'épaisseur du disque-rotor en tôle ou en fonte est alors comprise entre 10 mm et 20 mm, de préférence 15 mm pour un diamètre de l'ordre de 300 mm. L'épaisseur du couvercle en aluminium peut être de l'ordre de 10 mm. Ces dimensions s'avèrent optimum dans la mesure où l'on obtient la puissance électrique nécessaire dans un encombrement réduit venant élégamment se positionner en sortie d'un moteur thermique de puissance de l'ordre de 7,5 kW.

Avantageusement alors la face arrière du volant-rotor présente des rainures radiales, par exemple, de profondeur de l'ordre de 5 mm pour une longueur de 80 mm favorisant la géométrie du flux magnétique.

L'épaisseur du volant-rotor en fonte est alors de préférence comprise entre 40 mm et 70 mm pour un diamètre de l'ordre de 300 mm, et la cavité circulaire présente une profondeur comprise entre 5 mm à 12 mm, de préférence 8 mm correspondant à l'épaisseur des aimants. Les aimants permanents étant plus denses que l'acier ou la fonte composant le volant, ces dimensions permettent d'assurer une masse inertielle de régulation mécanique et une grande rigidité nécessaire à un bon équilibre dynamique.

Le rotor étant directement associé, voire intégré dans le volant, on a pu ainsi supprimer les pièces usuelles d'accouplement, ce qui non seulement diminue le risque de vibrations, mais augmente la fiabilité et la longévité du générateur.

La face interne du volant-rotor peut de plus présenter des ailettes ajoutant à ce volant-rotor une fonction de ventilateur soufflant un courant d'air de refroidissement, par exemple, vers le bloc cylindre du moteur thermique.

De manière analogue, le couvercle présente en sa face interne une cavité circulaire dans laquelle est directement implanté le circuit magnétique portant les enroulements du stator.

L'épaisseur du couvercle est alors comprise entre 50 mm et 70 mm, de préférence de l'ordre de 60 mm, et la cavité circulaire pour l'implantation du circuit magnétique portant les enroulements est comprise entre 30 mm et 40 mm.

Ces dimensions pour la puissance électrique désirée assurent une grande stabilité structurelle de ce stator qui peut donc sans risque être agencé particulièrement près du rotor, l'entrefer étant alors réduit à environ 0,6-0,8 mm, ce qui augmente le rendement du groupe.

Avantageusement, la face externe du couvercle présente des ailettes de refroidissement rapportées ou réalisées dans la masse, assurant ainsi un refroidissement effectif du générateur.

Le circuit magnétique du stator est de préférence réalisé à partir d'une bande de feuillard dans lequel on ménage des encoches en forme de T inversé à intervalles croissants de telle sorte que lorsque, cette bande est roulée en une couronne, les encoches se superposent radialement pour former entre elles les pôles.

L'invention sera mieux comprise à l'étude de modes de réalisation pris à titre nullement limitatif et illustrés dans les figures annexées dans lesquelles :
- la figure 1 est une vue en coupe schématique verticale d'un mode de réalisation d'un groupe électrogène selon l'invention dans lequel le rotor est réalisé sur un disque unique séparé directement associé au volant du moteur thermique;
- la figure 2 est une vue en coupe schématique verticale au niveau du générateur électrique d'un autre mode de réalisation d'un groupe électrogène selon l'invention dans lequel le rotor est directement intégré au volant du moteur thermique;
- la figure 3 est une vue en coupe schématique verticale au niveau du générateur électrique d'un autre mode de réalisation d'un groupe électrogène selon l'invention dans lequel le rotor est réalisé sur un disque séparé directement associé au volant du moteur thermique, les amants permanents du rotor étant couverts par une tôle de maintien et de protection, et la charge axiale est reprise par une butée externe au moteur.

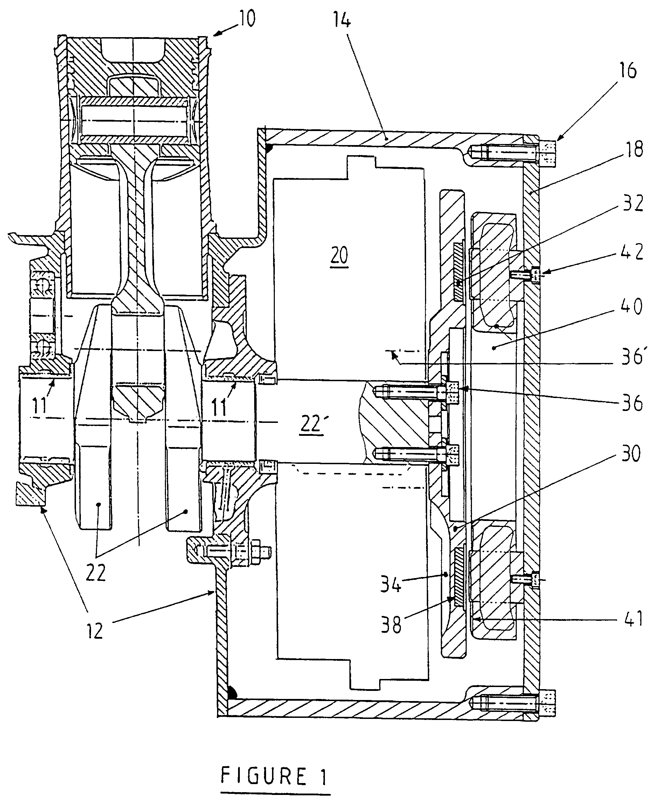

Sur la figure 1 est illustré schématiquement en coupe verticale un groupe électrogène comprenant d'une part un moteur thermique 10 et d'autre part un générateur électrique composé d'un rotor 30 tournant devant un stator 40.

Ce moteur thermique 10 peut être à essence, mais de préférence est un moteur diesel, notamment un moteur diesel monocylindre fonctionnant avec plusieurs types de carburant tels que du fuel, diesel, huile végétale ou analogues. Sur cette figure 1, on reconnaît un piston articulé à l'extrémité d'une belle et coulissant à l'intérieur de son cylindre. L'autre extrémité de la bielle est montée en rotation sur un vilebrequin 22 porté également mobile en rotation par deux paliers 11 au sein du carter de moteur 12. Le prolongement 22' du vilebrequin orienté vers la droite sur la figure constitue donc l'arbre de sortie mécanique du moteur thermique 10.

Le moteur thermique 10 comprend de plus un volant d'inerte 20 monté sur la sortie mécanique 22' du vilebrequin par lequel il est directement entraîné en rotation. Pour des considérations de sécurité des utilisateurs, ce volant 20 est contenu à l'intérieur d'une flasque 14 prolongeant le carter 12 de moteur. Un couvercle 18 fixé par des vis 16 à la flasque 14 ferme l'enceinte contenant le volant d'inertie 20.

L'on met à profit la rotation du volant d'inertie 20 en regard du couvercle 18 pour y agencer un générateur de puissance électrique.

Ce générateur électrique comprend d'une part un rotor 30 sous la forme d'un disque unique plat circulaire métallique, ce disque étant notamment constitué par une tôle usinée en tournage, fraisage et perçage et sur lequel a été appliqué un traitement de surface pour éviter l'oxydation. Le fraisage a notamment permis de dégager dans la face frontale une cavité 38 en forme de couronne circulaire médiane coaxiale. Dans cette cavité sont encollés et résinés seize groupes d'aimants permanents 32 au samarium de cobalt, chaque groupe d'aimants présentant une forme en secteur circulaire. Cet ensemble rotor est ensuite équilibré dynamiquement.

Dans le mode de réalisation illustré sur la figure 1, ce rotor 30 est fixé à l'extrémité de l'arbre 22' de vilebrequin 22 par des vis de fixation 36, étant bien entendu qu'on aurait pu fixer également ce rotor 30 directement au volant d'inertie 20 par des vis de fixation 36'.

Si désiré, on peut également prévoir le fraisage de rainures radiales 34 dans la face arrière interne du disque de rotor 30 pour une meilleure circulation du flux magnétique des aimants permanents 32.

Dans le cas des puissances électriques recherchées comprises entre 2 et 20 kVA, le diamètre du disque de rotor est de l'ordre de 280 mm pour une épaisseur de l'ordre de 15 mm. Les aimants permanents ont alors une profondeur de l'ordre de 5 mm pour une hauteur radiale de l'ordre de 35 mm, l'angle au sommet du secteur circulaire d'un aimant étant de l'ordre de 22 degrés.

Le générateur comprend d'autre part un stator 40 se présentant sous la forme générale d'une couronne circulaire. Le circuit magnétique de ce stator est notamment constitué à partir d'un feuillard au silicium à grains orientés, découpé d'encoches, puis roulé et soudé en bout de façon à former une couronne très compacte présentant une série de pôles côte-à-côte orientés radialement et axialement en direction du stator. Autour de ces pôles sont montées des galettes bobinées d'induit, leur nombre de spires dépendant de la fréquence et de la tension désirées. L'ensemble du stator 40 est ensuite imprégné et moulé dans une résine de protection 41 telle qu'une résine époxy contenant des liants spécifiques renforçant mécaniquement l'ensemble pour qu'il tienne aux vibrations, chocs thermiques et hautes températures.

Dans le mode de réalisation illustré sur cette figure 1, cette couronne de stator 40 est vissée directement contre la face interne du couvercle 18 par des vis de fixation 42, et ceci très exactement en regard du rotor 30, c'est-à-dire coaxialement à la sortie 22' du vilebrequin 22. Le stator présente un diamètre de l'ordre de 250 mm pour une épaisseur de l'ordre de 28 mm.

Le groupe électrogène comprend en outre une électronique de contrôle et de régulation composée de six circuits principaux. Le premier circuit constitue un automate permettant de démarrer le moteur par la clé de contact, ou en automatique par manque de puissance sur le réseau, ou par un ordre extérieur. Cet automate permet aussi de surveiller la survitesse ou la sous-vitesse du moteur, la pression et la température d'huile. Le second circuit constitue une régulation en boucle permettant d'actionner le débit de la pompe d'injection du moteur diesel par l'intermédiaire d'un actuateur électrique et d'un capteur de courant faisant ainsi varier la vitesse du moteur en fonction de la puissance utilisée. Le troisième circuit est un onduleur de puissance travaillant par programmation ou par commutation pour reconstituer en sortie une tension et une fréquence bien définies, et ceci avec une sinusoïde parfaite. Finalement, l'électronique de contrôle peut comprendre également un quatrième circuit de charge et de surveillance des batteries montées en tampon, un cinquième circuit de protection contre les surcharges et courtscircuits en entrée et/ou en sortie et un sixième circuit de filtrage également en entrée et en sortie.

Une fois le moteur thermique 10 lancé, on obtient donc à la sortie du stator 40 un courant alternatif dont la tension et la fréquence, donc la puissance, sont directement proportionnelles à la vitesse du moteur. Par exemple, à une vitesse de moteur de 1 500 tours/minute, on obtient en sortie de stator 40 une tension de 53,4 volts à une fréquence de 200 hertz, alors que pour une vitesse de 4 500 tours/minute, on obtient une tension de l'ordre de 160 volts à une fréquence de l'ordre de 600 hertz.

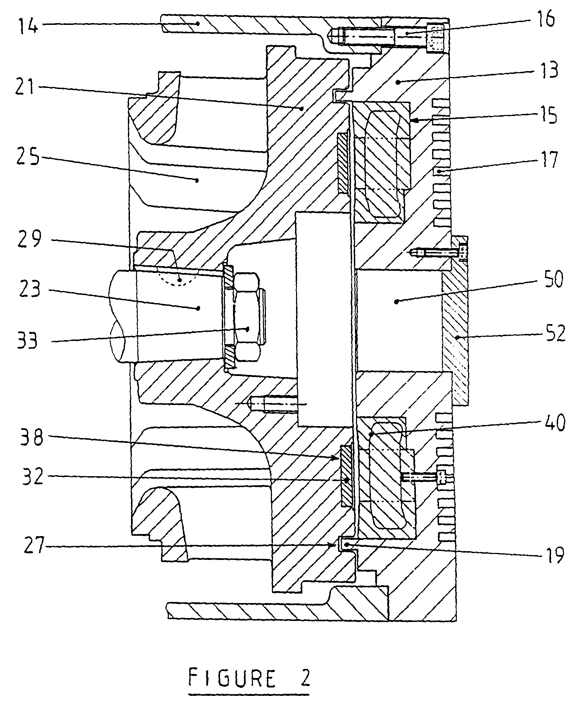

Sur la figure 2 est illustré un mode de réalisation plus élaboré du générateur électrique intégré en l'extrémité du moteur thermique selon l'invention. On reconnaît comme précédemment la sortie d'arbre de vilebrequin 23 émergeant dans un espace défini par une flasque de carter 14 fermée par un couvercle 13 fixé par des boulons 16.

Dans ce mode de réalisation, on fraise une cavité circulaire 38 directement dans la face frontale du volant d'inerte 21, cavité dans laquelle sont installés les aimants permanents 32. On peut ainsi considérer que dans ce cas, le disque portant les aimants permanents est directement associé et intégré dans le volant 21 puisqu'il ne forme qu'une seule pièce avec celui-ci.

La partie interne arrière du volant d'inertie 21 comprend une pluralité d'ailettes 25 donnant à ce volant une fonction supplémentaire de ventilateur. Ce volant d'inertie permet donc de créer un flux d'air qui peut être dirigé par la suite en direction du cylindre du moteur thermique pour le refroidir.

Comme illustré, ce volant d'inertie 21 est monté en extrémité 23 de vilebrequin au moyen d'un écrou de fixation 33, une clavette 29 assurant l'entraînement en rotation. Ce rotor présente un diamètre externe de l'ordre de 300 mm pour une épaisseur de l'ordre de 50 mm, les ailettes ayant une largeur de l'ordre de 80 mm.

En correspondance, le couvercle 13 est moulé ou usiné de telle sorte à comporter dans la masse un logement annulaire 15 dans lequel est directement intégré et noyé l'enroulement de stator 40. Le diamètre externe du couvercle est ici de l'ordre de 350 mm correspondant au diamètre externe de la flasque 14. L'épaisseur de ce couvercle est de l'ordre de 60 mm, la cavité 15 de logement de stator 40 présentant une profondeur de l'ordre de 30 mm.

Les dimensions citées précédemment assurent une rigidité suffisante du générateur de telle sorte à pouvoir minimiser autant que possible l'entrefer, notamment le réduire à environ 0,6 mm. Il convient notamment de noter que la force d'attraction générée au sein du générateur peut monter jusqu'à 850 kgf, et il convient alors de renforcer les paliers et la butée d'appui du vilebrequin au sein du moteur thermique. Dans ce mode de réalisation, il est préférable, surtout pour des raisons d'encombrement de prévoir à l'intérieur de l'ensemble moteur, lors de la fabrication de celui-ci, une butée axiale sous forme d'un roulement interne (non illustré sur les figures).

Compte tenu de la rigidité de ces éléments de générateur, on peut en outre envisager de créer en la face arrière interne du couvercle-stator 13 une nervure circulaire 19 pénétrant avec un faible jeu dans une rainure circulaire 27 ménagée en correspondance dans la face frontale du volant d'inertie 21. Cette nervure 19 et cette rainure 27 forment entre elles une chicane protégeant les amants et les enroulements de toute poussière et de toute humidité néfastes.

Comme illustré sur cette figure 2, on peut en outre prévoir dans la partie centrale du couvercle-stator 13 un évidement formant logement 50 fermé par un couvercle 52 dans lequel peut être installé tout ou partie de l'électronique de contrôle et de régulation décrite précédemment.

Si désiré, on peut également prévoir une série de rainures circulaires 17 concentriques en la face externe du couvercle-stator 13, ces rainures formant ainsi entre elles une série d'ailettes de refroidissement du générateur.

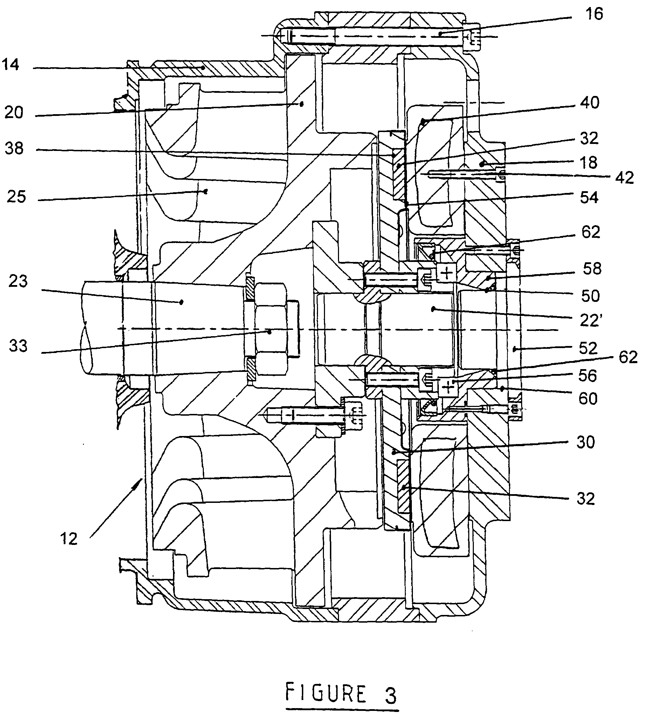

La figure 3 montre un autre mode de réalisation dans lequel le disque rotor portant les aimants permanents est un disque séparé, associé directement au volant du moteur thermique, comme cela est le cas dans le mode de réalisation déjà décrit en référence à la figure 1. Les éléments communs aux modes de réalisations illustrés sur les figures 1 et 2 portent ici les mêmes numéros de référence et ils ne seront pas décrits de nouveau. Seules les différences seront expliquées plus en détail.

Ainsi, les amants permanents 32 sont logés dans une cavité circulaire 38 qui dans ce mode de réalisation est fermée par une tôle mince 54 de maintien et de protection des aimants permanents, cette tôle étant fabriquée en un acier inoxydable amagnétique et elle est fixée au disque rotor 30, par exemple par rivetage. Dans ce mode de réalisation, la tôle 54 a la forme d'une rondelle permettant le passage d'un prolongement 22' de l'arbre de vilebrequin 23 ou de tout autre arbre de transmission.

La profondeur de la cavité circulaire 38 et l'épaisseur des amants permanents 32 sont telles que la surface de ceux-ci tournée vers le stator 40 se trouve au ras de la face correspondante du disque rotor. Les aimants permanents 32 se trouvent, grâce à la présence de cette tôle 54, protégés et maintenus à l'intérieur de la cavité circulaire 38 et ne risquent pas de s'effriter ou de décoller de la cavité lorsque le moteur tourne à une vitesse très élevée.

Comme déjà mentionné, la force d'attraction générée au sein du générateur peut monter jusqu'à 850 kgf, et il convient ainsi de renforcer les paliers de l'arbre d'entraînement de l'ensemble volant-disque rotor. Cela est dans ce mode de réalisation obtenu grâce à une butée axiale 56 sous forme d'un roulement externe au moteur thermique. Ce roulement 56 est disposé entre le rotor 30 et le stator 40 de manière à relier ces éléments l'un à l'autre. Le roulement est placé dans un anneau de montage 58 serré dans une ouverture centrale 60 du couvercle 18.

Pour davantage protéger l'intérieur du générateur de la poussière et de l'humidité, des joints d'étanchéité 62 sont prévus entre d'une part le rotor 30 et le stator 40, et d'autre part entre l'anneau de montage 58 et le couvercle 52.

Il est bien entendu possible de prolonger l'arbre de sortie du moteur pour qu'il puisse dépasser l'ouverture 60 pour être connecté à une transmission ou un arbre d'entraînement d'un mécanisme quelconque.

Comme on a pu le constater à la lecture de cet exposé, l'invention propose un groupe électrogène particulièrement compact, léger, étanche, sans pièces d'usure, donc sans entretien et très fiable. Les aimants permanents se trouvent bien protégés en dessous de la tôle de maintien et de protection et l'effort engendré par le flux magnétique est repris par la butée axiale.

Le moteur thermique 10 est de préférence un moteur diesel monocylindre pour des considérations de coût de mise en oeuvre, mais peut également être un moteur diesel à plusieurs cylindres, voire un moteur à essence à un ou plusieurs cylindres. Notamment, pour des puissances électriques désirées supérieures ou inférieures à la plage mentionnée, l'homme de l'art sait redimensionner les pièces constitutives dans des rapports adéquats.

Ce groupe électrogène peut ainsi grâce à son convertisseur produire une tension de 115 volts à 400 hertz pour une puissance de 9 kVA triphasée ou de 110 volts à 200 hertz pour une puissance de 4,5 kVA triphasée ou de 42 volts à 200 hertz pour une puissance de 4,5 kVA triphasée, voire une tension continue de 48 volts, 125 ampères, pour une puissance de 6 kVA DC.

Les groupes électrogènes aussi compacts peuvent trouver de multiples applications, notamment dans le domaine aéronautique, marin, mais aussi au sein d'armoires de télécommunication ou en tant que chargeurs de batterie. Il est également envisageable de monter un tel groupe électrogène compact au sein d'un véhicule hybride. Il peut être également utilisé en cogénération. Ce groupe électrogène est la plupart du temps utilisé dans des travaux publics soit pour de l'éclairage, soit pour mettre en oeuvre des outils.

De nombreuses améliorations peuvent être apportées à ce groupe électrogène dans le cadre des revendications.

## Revendications

1. Groupe électrogène comprenant un moteur thermique (10) accouplé à un générateur électrique, le générateur étant du type synchrone avec un rotor (30) sous forme de disque rotatif portant en sa face frontale des aimants permanents (32) en vis-à-vis de bobinages induits (30) portés en la face d'un disque fixe formant le stator (40), le rotor étant directement associé au volant (20) du moteur thermique (10), caractérisé en ce que le rotor est constitué d'un disque unique pourvu d'une cavité circulaire (38) dans laquelle sont encastrés les aimants permanents (30).

2. Groupe électrogène suivant la revendication 1, caractérisé en ce que les aimants permanents (30) sont au ras de la face du rotor (30) tournée vers le stator (40).

3. Groupe électrogène suivant la revendication 1 ou 2, caractérisé en ce que les amants permanents (30) sont enfermés dans la cavité circulaire (38) du rotor (30) par une tôle de maintien et de protection (54) fixée à celui-ci.

4. Groupe électrogène suivant la revendication 3, caractérisé en ce que ladite tôle de maintien et de protection (54) est en un acier inoxydable amagnétique.

5. Groupe électrogène suivant l'une quelconque des revendications précédentes, caractérisé en ce que le disque rotor (30) est rapporté contre le volant (20) du moteur thermique (10).

6. Groupe électrogène suivant l'une quelconque des revendications 1 à 4, caractérisé en ce que le disque rotor (30) est intégré dans le volant (20) du moteur thermique (10).

7. Groupe électrogène suivant l'une quelconque des revendications précédentes, caractérisé en ce que le disque stator (40) est rapporté contre un couvercle (18) en vis-à-vis d'un carter (14) de protection du volant (20).

8. Groupe électrogène suivant l'une quelconque des revendications 1 à 6, caractérisé en ce que le disque stator (40) est intégré dans un couvercle (13) en vis-à-vis d'un carter (14) de protection du volant (20).

9. Groupe électrogène suivant l'une quelconque des revendications 1 à 5 et 7 à 8, caractérisé en ce que les forces axiales engendrées par les aimants (32) sont reprises par une butée axiale (56) sous forme d'un roulement externe au moteur thermique (10).

10. Groupe électrogène suivant la revendication 9, caractérisé en ce que ladite butée axiale (56) est disposée entre le rotor (30) et le stator (40).

11. Groupe électrogène selon l'une des revendications précédentes, caractérisé en ce que la face du stator (40) en regard du rotor (30) est protégée par un vernis ou un enrobage de protection (41) et moulée dans une résine comportant des liants absorbant les chocs thermiques.

12. Groupe électrogène selon l'une des revendications 8 à 11, caractérisé en ce que le couvercle (13) présente en sa face interne une cavité circulaire (15) dans laquelle est directement implanté le circuit magnétique portant les enroulements du stator (40).

13. Groupe électrogène selon l'une des revendications 8 à 12, caractérisé en ce que le couvercle présente une nervure circulaire (19) entourant le stator (40) et pénétrant avec un faible jeu dans une rainure circulaire (27) ménagée en correspondance dans le disque rotor (21).

14. Groupe électrogène selon l'une quelconque des revendications 1 à 5 et 7 à 13, caractérisé en ce que le rotor (30) présente des rainures radiales (34) en sa face arrière pour mieux diriger le flux magnétique.

15. Groupe électrogène selon l'une des revendications 1 à 4 et 6 à 13, caractérisé en ce que la face interne du volant rotor (21) présente des ailettes (25) de ventilateur.

16. Groupe électrogène selon l'une des revendications 8 à 15, caractérisé en ce que la face externe du couvercle (13) présente des ailettes de refroidissement (17) rapportées ou réalisées dans la masse.

17. Groupe électrogène selon l'une des revendications 8 à 16, caractérisé en ce que le centre du couvercle (13) présente un évidement central traversant (50) pour recevoir un circuit de régulation, de conversion et/ou de redressement de puissance ou pour le passage d'un prolongement (22') du vilebrequin (23) du moteur thermique (10) pour l'accouplement, par un arbre de transmission, de toute autre machine ou d'un entraînement mécanique quelconque.
